# EUROPÄISCHE PATENTSCHRIFT

(11) **EP 0 380 951 B1**
(45) Veröffentlichungstag und Bekanntmachung des Hinweises auf die Patenterteilung: **21.06.1995**
(21) Anmeldenummer: 90100761.7
(22) Anmeldetag: 15.01.1990
(51) Int. Cl.: H04Q 11/04, H04Q 3/545, H04Q 3/60

(54) **Schaltungsanordnung für Fernmeldevermittlungsanlagen, insbesondere Fernsprechvermittlungsanlagen, mit dezentralen Schaltungseinheiten teilzentralen Schaltgliedern und zentralen Schalteinrichtungen**
Circuit arrangement for communication exchanges, especially telephone exchanges, with remote switches, distributed switching and central switching arrangements
Circuit pour centraux de télécommunications, en particulier centraux téléphoniques, avec des commutateurs à distance, des groupes de commutateurs distribués et des dispositifs de commutation centraux

(30) Priorität: 03.02.1989 DE 3903292
(43) Veröffentlichungstag der Anmeldung: 08.08.1990
(73) Patentinhaber: SIEMENS AKTIENGESELLSCHAFT, 80333 München (DE)
(72) Erfinder: Birlmeier, Josef, D-8024 Deisenhofen (DE); Prey, Gerhard, D-8031 Eichenau (DE); Murr, Robert, D-8000 München 71 (DE)

(56) Entgegenhaltungen:
- EP-A- 0 197 312
- EP-A- 0 291 789
- DE-A- 1 524 212
- DE-A- 3 224 459
- US-A- 4 178 479
- TELCOM REPORT, ENGL. AUSGABE Bd. 5, Nr. 4, 1982, MÜNCHEN (DE) Seiten 262 - 266; FRIESER ET AL: 'Digital Concentrators in the EWSD Telephone Switching System'
- COMMUTATION & ELECTRONIQUE Nr. 10, Oktober 1965, PARIS (FR) Seiten 5 - 27; DUQUESNE ET AL:'Programmation et sécurité des autocommutateurs électroniques'
- PROCEEDINGS OF THE ISS - SESSION 34 A, PAPER 4 Mai 1984, FLORENCE (IT) Seiten 1 - 7; DABROWSKI ET AL: 'The hardware and software design for medium size digital switching systems'

## Beschreibung

Die Erfindung betrifft eine Schaltungsanordnung für Fernmeldeanlagen, insbesondere Fernsprechvermittlungsanlagen, in denen
- dezentrale Schaltungseinheiten, z.B. Teilnehmerstellen, über ein teilzentrales Schaltglied, z.B. einen Konzentrator, mit einer zentralen Schalteinrichtung, z.B. einem Prozessor, zur Abfrage von zum einen Daten einer ersten Art, z.B. Vermittlungs-Betriebs-Daten, und zum anderen Daten einer zweiten Art, z.B. die Schaltungseinheiten betreffende Betriebszustandsdaten, verbunden sind, und
- das Schaltglied derart augestaltet ist, daß auf einen seitens der Schalteinrichtung mittels des Schaltgliedes bewirkten Abruf von Daten, die von den Schaltungseinheiten stammen, diese Daten in dem Schaltglied gesammelt und zwischengespeichert werden, und
- in dem Schaltglied zwei parallel und unabhängig voneinander die Datenabruf-, Datensammel- und Datenzwischenspeicherungsvorgänge in zyklischem Umlauf über alle dem betreffenden Schaltglied zugeordnete Schaltungseinheiten hin abwickelnde Datenabrufsammelspeicher vorgesehen sind, und
- Mittel vorgesehen sind, um die Datensammelspeicher seitens der Schalteinrichtung über eine dem Schaltglied zugeordnete Datenleitung auf ein Vorliegen zwischengespeicherter Daten abzufragen.

Mit Ausnahme der zuvor angesprochenen Behandlung von Betriebszustandsdaten ist eine Schaltungsanordnung der zuvor angegebenen Art durch die deutsche Offenlegungsschrift 3 224 459 bekannt. Eine Schaltungsanordnung der eingangs angegebenen Art, die also auch noch die angesprochene Art und Weise der Behandlung der Betriebszustandsdaten mit umfaßt, ist durch im praktischen Betrieb verschiedenenorts befindliche EWSD-Fernsprechvermittlungsanlagen bekannt.

In einer Anordnung der durch die genannte Offenlegungsschrift bekannten Art sind die dezentralen Schaltungseinheiten Teilnehmerstellen, die teilzentralen Schaltglieder Konzentratoren und die zentralen Schalteinrichtungen zentrale Prozessoren einer übergeordneten Fernsprechvermittlungsstel le. In einem Konzentrator sind zwei Datenabrufsammelspeicher vorgesehen, die weitestgehend unabhängig voneinander arbeiten. Ein Datenabrufsammelspeicher ist in diesem bekannten Fall jeweils Bestandteil eines jeden von zwei pro Konzentrator vorgesehenen Konzentratorprozessoren. Die Datenabrufsammelspeicher rufen die genannten Daten von den dezentralen Schaltungseinheiten ab und halten sie zwischengespeichert zum Abfragen durch die zentrale Schalteinrichtung bereit. Das zuvor angesprochene unabhängige Arbeiten jedes der beiden pro teilzentrales Schaltglied vorgesehenen Datenabrufsammelspeicher besteht u.a. darin, daß jeder von ihnen bei jeder dezentralen Schaltungseinheit (Teilnehmerstelle) Informationen abrufen kann. Dabei ist lediglich sichergestellt, daß ein Verbindungsaufbau von oder zu einer bestimmten dezentralen Schaltungseinheit, bei dem einer der beiden Datenabrufsammelspeicher angefangen hat, dann auch alleine von diesem weiter bearbeitet wird. - Die Datenabrufsammelspeicher rufen also die Daten ab und zwischenspeichern sie. In diesem Zusammenhang werden diese Daten auch gesammelt, insoweit sie nicht bereits jeweils von der betreffenden zentralen Schalteinrichtung (zentraler Prozessor) inzwischen, also sehr schnell abgefragt worden sind. Die zentrale Schalteinrichtung fragt also sukzessive nacheinander die in größerer Anzahl vorhandenen teilzentralen Schaltglieder (Konzentratoren) ab, und zwar nacheinander die jeweils in einem Konzentrator vorgesehenen beiden Datenabrufsammelspeicher.

Wie eingangs angegeben wurde, gibt es in diesem Zusammenhang Daten einer ersten Art und solche einer zweiten Art. Hierbei möge es sich z.B. um Vermittlungs-Betriebs-Daten einerseits und um die Schaltungseinheiten betreffende Betriebszustandsdaten andererseits handeln.

Wie nun die praktische Erfahrung zeigt, kann es für die Gesamtheit der Betriebsabläufe in einer Fernmeldeanlage der eingangs angegebenen Art sehr zweckmäßig sein, die Daten der ersten Art in kürzeren Zeitabständen abzufragen als die Daten der zweiten Art. Wenn man nämlich davon ausgeht, daß die Daten der ersten Art dazu dienen, den Vermittlungsbetrieb abzuwickeln, und daß die Daten der zweiten Art dazu dienen, zu überwachen, ob sich sämtliche am Vermittlungsbetrieb beteiligten Bestandteile in einem ungestörten Betriebszustand befinden, also eine unbeeinträchtigte Funktionsfähigkeit aufweisen, zeigt es sich als zweckmäßig, die Daten der ersten Art einerseits und die der zweiten Art andererseits, die durch die betreffende zentrale Schalteinrichtung von den Datenabrufsammelspeichern in den teilzentralen Schaltgliedern abgefragt werden, nicht mit gleicher Häufigkeit abzufragen.

Für die Erfindung, die davon ausgeht, daß die Abfragehäufigkeit bezüglich der genannten beiden Datenarten nicht gleich sein muß, besteht die Aufgabe, den für die angegebene Behandlung der Daten der zweiten Art erforderlichen Aufwand möglichst gering zu halten. Dies hat besondere Bedeutung für den Fall, daß dieser Aufwand nachzurüsten wäre.

Bei einer Schaltungsanordnung der eingangs angegebenen Art wird die Aufgabe dadurch gelöst,
- daß in einem der beiden Datenabrufsammelspeicher außer Daten der ersten Art auch Daten der zweiten Art, dagegen in dem anderen der beiden Datenabrufsammelspeicher nur Daten der ersten Art abgerufen, gesammelt und zwischengespeichert werden, und
- daß eine Leseeinrichtung zur kontinuierlichen und zerstörungsfreien Übertragung von in dem einen Datenabrufsammelspeicher abgerufenen, gesammelten und zwischengespeicherten Daten der zweiten Art an eine Abfragestelle in dem anderen Datenabrufsammelspeicher vorgesehen ist, wo sie für die Schalteinrichtung ohne Zwischenspeicherung kontinuierlich empfangsbereit zur Verfügung stehen, und
- daß die Schalteinheit Mittel zum Abfragen der beiden Datenabrufsammelspeicher einerseits in regelmäßiger Folge in relativ kurzen Zeitabständen auf ein Vorliegen von Daten der ersten Art und andererseits nur der eine Datenabrufsammelspeicher zusätzlich laufend in regelmäßigen, relativ längeren Zeitabständen auf ein Vorliegen von Daten der zweiten Art enthält, und
- daß im Fall einer durch die Schalteinrichtung festgestellten Störung bei einer Abfrage über die Datenleitung des einen Datenabrufsammelspeichers, insbesondere im Fall einer Störung der zugehörigen Datenleitung, der andere Datenabrufsammelspeicher von der Schalteinrichtung über die zugehörige Datenleitung angesteuert wird und die dort kontinuierlich empfangsbereit zur Verfügung stehenden Daten der zweiten Art über die Abfragestelle zu der Schalteinrichtung übertragen werden.

Bei jeweils dem zweiten Datenabrufsammelspeicher in jedem der teilzentralen Schaltglieder brauchen also keine Mittel zum Sammeln der Daten der zweiten Art und für ihre Zwischenspeicherung vorgesehen zu werden. Stellt die betreffende zentrale Schalteinrichtung, z.B. ein zentraler Prozessor, fest, daß der Abfragevorgang bei einem ersten Datenabrufsammelspeicher nicht störungsfrei abläuft, so steuert sie sofort den zugehörigen zweiten Datenabrufsammelspeicher an und empfängt über diesen die betreffenden Daten der zweiten Art, die vom ersten Datenabrufsammelspeicher kontinuierlich zu der Abfragestelle im zweiten Datenabrufsammelspeicher abgegeben werden und die auf diese Weise vom ersten Datenabrufsammelspeicher über die Abfragestelle im zweiten Datenabrufsammelspeicher direkt zur betreffenden abfragenden zentralen Schalteinrichtung übertragen werden, also ohne eine Zwischenspeicherung und ohne eine Zwischenspeicherungsnotwendigkeit im zweiten Datenabrufsammelspeicher. Dies ist von besonderer Bedeutung für den Fall, daß sämtliche Datenabrufsammelspeicher ursprünglich nicht mit den Schaltmitteln und mit der Funktion für die genannten Daten der zweiten Art ausgestattet sind und teilweise (d.h. diejenigen, die jeweils erste Datenabrufsammelspeicher im Sinne der Erfindung ursprünglich nicht sind, dies aber sein bzw. werden sollten) noch entsprechend ausgestattet werden müßten (hardwaremäßig und/oder softwaremäßig); in diesem Fall können die genannten, ursprünglich also an Plätzen von ersten und in diesem Falle deshalb noch nicht entsprechend ausgestatteten Datenabrufsammelspeicher in jedem der Schaltglieder durch solche neuen Datenabrufsammelspeicher ersetzt werden, die mit den Schaltmitteln und Funktonen für die genannten Daten der zweiten Art bereits von vornherein ausgestattet sind. Die zuvor genannten Datenabrufsammelspeicher, die noch nicht ausgestattet sind, können dann als zweite Datenabrufsammelspeicher leicht wieder verwendet werden, d.h. ohne ein nachträgliches Ausstatten mit den betreffenden, zuvor genannten Schaltmitteln und Funktionen.

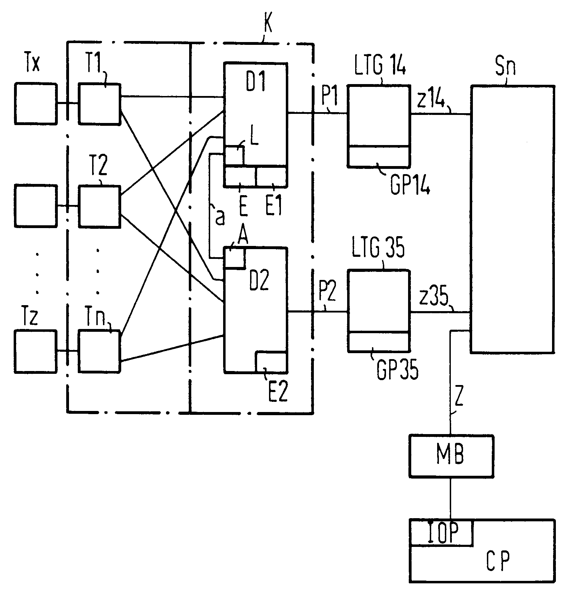

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist. Dargestellt in der Zeichnung ist ein digitaler Konzentrator, der an eine PCM-Fernsprechvermittlungsstelle angeschlossen ist. PCM-Fernsprechvermittlungsstellen sowie digitale Konzentratoren können hier als an sich bekannt vorausgesetzt werden. Hierzu sei auf die Zeitschrift "telcom report" und zwar einerseits auf das Beiheft "Digitalvermittlungssystem EWSD" (4.Jahrgang/1981) und andererseits auf die englischsprachige Ausgabe dieser Zeitschrift, Heft 5 vom Jahrgang 1982 hingewiesen. Darüber hinaus sind digitale Konzentratoren auch in den deutschen Offenlegungsschrift 3 512273 und 3 512 274 beschrieben. Außerdem ist auch noch auf die deutschen Offenlegungsschriften 3 609 889 und 3 609 890 hinzuweisen.

In der Zeichnung ist als ein teilzentrales Schaltglied ein Konzentrator K angedeutet. Zu ihm gehören als dezentrale Schaltungseinheiten Teilnehmeranschlußschaltungen Tl bis Tn, die in an sich bekannter Weise einzeln Konzentratorteilnehmerstellen Tx bis Tz zugeordnet sind.

Der Konzentrator K ist über zwei PCM-Leitungen mit je einer Anzahl von z.B. 32 Kanälen an eine übergeordnete Vermittlungsstelle und zwar in dieser an zwei verschiedene Anschlußgruppen LTG14 und LTG35 angeschlossen, die ihrerseits in an sich bekannter Weise verbunden sind über Zeitmultiplexleitungen z14 und z35 mit einem zentralen Koppelfeld Sn dieser Vermittlungsstelle. An das Koppelfeld ist außerdem über eine Zeitmultiplexleitung Z ein Zwischenspeicher MB angeschlossen und mit diesem steht ein zentraler Prozessor CP über einen Eingabe-Ausgabe-Prozessor IOP in Verbindung. Jede Anschlußgruppe weist u.a. einen Gruppenprozessor (GP14 bzw. GP35) auf. Jeder der Gruppenprozessoren steht über einen eigenen Datenkanal mit dem zentralen Prozessor CP in Datenaustausch. Dieser Datenkanal ist über das Koppelfeld Sn durchgeschaltet und befindet sich ständig im betriebsbereiten Zustand. Diese und weitere Zusammenhänge werden als bekannt vorausgesetzt, weil sie in größerer Ausführlichkeit in der obengenannten Zeitschrift "telcom report" beschrieben sind. In der englischsprachigen Ausgabe der genannten Zeitschrift sowie in den genannten Offenlegungsschriften ist auch die Zusammenarbeit eines digitalen Konzentrators mit einem zentralen Prozessor beschrieben.

Die als Teilnehmeranschlußschaltungen mit ihren Teilnehmerstellen ausgebildeten dezentralen Schaltungseinheiten stehen also über ein als digitaler Konzentrator ausgebildetes teilzentrales Schaltglied letztlich in Datenaustausch mit dem zentralen Prozessor. Hierbei wirken die Gruppenprozessoren der Anschlußgruppen in an sich bekannter Weise mit; ein Teil der von den Teilnehmerstellen abgegebenen Daten wird auch bereits von diesen Gruppenprozessoren verarbeitet. Teilweise werden diese Daten auch mit Hilfe dieser Gruppenprozessoren vorverarbeitet zum zentralen Prozessor weitergegeben. Dies ist in den genannten älteren Druckschriften in großer Ausführlichkeit beschrieben und wird hier als bekannt vorausgesetzt. Die von den Teilnehmerstellen stammenden Daten werden nun zunächst vom Konzentrator K abgerufen; dieser ruft sie in an sich bekannter Weise bei den zugeordneten Teilnehmeranschlußschaltungen Tl bis Tn ab. Diese Daten werden im Konzentrator mit Hilfe seiner Konzentratorprozessoren D1 und D2 abgerufen und zwischengespeichert. Jeweils an einer Verbindungsherstellung ist immer nur ein einziger Konzentratorprozessor beteiligt. Jedoch kann jeder der beiden Konzentratorprozessoren jede Verbindung herstellen; hat jedoch einer der Konzentratorprozessoren an der Herstellung einer Verbindung einmal begonnen, so führt auch nur er diese Verbindungsherstellung weiterhin bis zur endgültigen Verbindungsdurchschaltung durch. Die Daten werden in einem Speicher des Konzentratorprozessors zwischengespeichert, bis sie vom jeweiligen Gruppenprozessor oder vom übergeordneten zentralen Prozessor beim betreffenden Konzentratorprozessor abgefragt werden. Ruft der zentrale Prozessor diese Daten ab, so kann hierbei der jeweilige Gruppenprozessr in der an sich bekannten Weise mitwirken.

Das zuvor angesprochene Abfragen durch den zentralen Prozessor (sowie durch die ihn dabei unterstützenden Gruppenprozessoren) erfolgt in bestimmten Zeitabständen. Sowohl die Gruppenprozessoren als auch der zentrale Prozessor wickeln ihre Abfragevorgänge in an sich bekannter Weise zyklisch ab, indem sie die betreffenden Daten einzeln nacheinander an den verschiedenen Stellen abfragen. So werden also die Daten, die von den Schaltungseinheiten (Teilnehmeranschlußschaltungen mit Teilnehmerstellen) stammen, und die von den Konzentratorprozessoren abgerufen und zwischengespeichert werden, mit einem gewissen Zeitverzug gegenüber dem jeweiligen Beginn ihres Vorliegens abgefragt durch den zentralen Prozessor bzw. die Gruppenprozessoren; beim Abfragen durch den zentralen Prozessor können - wie gesagt - die Gruppenprozessoren in der angegebenen Weise auch mitwirken. In diesem Zusammenhang können Daten pro dezentrale Schaltungseinheit im betreffenden Konzentratorprozessor im Zusammenhang mit der hier erforderlichen Zwischenspeicherung auch gesammelt werden.

Die Datenabrufvorgänge, Datensammelvorgänge und Datenzwischenspeicherungsvorgänge werden also mittels der Konzentratorprozessoren D1 und D2 abgewickelt. Bestandteil dieser Konzentratoren sind deshalb Datenabrufsammelspeicher. Sie dienen der Funktion des Datenabrufs, der Datensammlung und der Datenzwischenspeicherung. Diejenigen Bestandteile in den Konzentratoren, die einer Realisierung dieser Funktionen dienen, bilden also u.a. jeweils die beiden Datenabrufsammelspeicher in den beiden Konzentratorprozessoren eines jeden Konzentrators. Die Schaltvorgänge gemäß den zuvor angesprochenen Funktionen werden von den Konzentratorprozessoren D1 und D2 in zyklischem Umlauf über alle Teilnehmeranschlußschaltungen Tl bis Tn durchgeführt, die also dem betreffenden Konzentrator K zugeordnet sind. Die Datenabrufsammelspeicher in jedem der Konzentratoren werden dann auf ein Vorliegen zwischengespeicherter Daten abgefragt. Dies geschieht in der beschriebenen Weise durch den zentralen Prozessor, wobei Gruppenprozessoren in der an sich bekannten Weise mitwirken können.

Wie bereits angegeben wurde, werden Daten zweierlei Art abgerufen, gesammelt und zwischengespeichert mit Hilfe der Konzentratorprozessoren, um dann von den Gruppenprozessoren und/oder vom zentralen Prozessor abgefragt zu werden. Daten einer ersten Art mögen z.B. sämtliche für den laufenden Vermittlungsbetrieb erforderliche Daten sein, wie z.B. Teilnehmeranruf, Wahlkennzeichen und dergleichen. Daten einer zweiten Art mögen z.B. Betriebszustandsdaten sein, die darüber Auskunft geben, in welchem Betriebszustand sich die betreffenden Bestandteile der Vermittlungsanlagen befinden, z.B. in ungestörtem oder in gestörtem Betriebszustand. Diese Betriebszustandsdaten werden ebenfalls in den Konzentratoren von den dezentralen Schaltungseinheiten in ihnen abgerufen, gesammelt und zwischengespeichert.

Bei diesen dezentralen Schaltungseinheiten kann es sich um mehr handeln als nur um die Teilnehmeranschlußschaltungen, z.B. um Rufgeneratoren, Tongeneratoren, Spannungsversorgungseinrichtungen und dergleichen. Auch um deren Betriebszustand kann es bei den Daten der zweiten Art gehen. Ferner können die genannten Betriebszustandsdaten auch verschiedene Betriebszustände pro Teilnehmeranschluß angeben, z.B. daß eine bestimmte Teilnehmerleitung eine Unterbrechung oder einen Kurzschluß aufweist, oder daß in der betreffenden Teilnehmeranschlußschaltung die Teilnehmer-Speisespannung ausgefallen ist, oder daß ein Blitzeinschlag in eine Teilnehmerfreileitung erfolgt ist und in der betreffenden Teilnehmeranschlußschaltung Zerstörungen angerichtet hat. Es werden also auch in der gleichen Weise diese Daten der zweiten Art abgerufen, gesammelt und im jeweiligen Konzentrator zwischengespeichert.

Erfindungsgemäß ist nun u.a. vorgesehen, daß ein erster Datenabrufsammelspeicher (in D1) außer Daten der ersten Art (in E1) auch Daten der zweiten Art (in E), dagegen ein zweiter Datenabrufsammelspeicher (in D2) nur Daten der ersten Art (in E2) abruft, sammelt und zwischenspeichert. Hierzu weist der eine der beiden Konzentratorprozessoren D1 einen Speicher E1 für die Daten der ersten Art und einen Speicher E für die Daten der zweiten Art auf. Dagegen weist der andere Konzentratorprozessor D2 nur einen Speicher E2 für die Daten der ersten Art auf. Also nur der erste Konzentratorprozessor D1 im Konzentrator K hat die Aufgabe, auch die Daten der zweiten Art von den verschiedenen Indikationsstellen z.B. in den Teilnehmeranschlußschaltungen u.a.m. (s.o.) abzurufen, zu sammeln und in seinem Speicher E zwischenzuspeichern. Der andere Konzentratorprozessor D2 ist mit dieser Aufgabe nicht belastet und in ihm sind die dafür erforderlichen Einrichtungen zum Abrufen, Sammeln und Zwischenspeichern nicht vorhanden. Der erste Datenabrufsammelspeicher im ersten Konzentratorprozessor D1 umfaßt also einen Speicher E1 für die Daten der ersten Art und einen Speicher E für die Daten der zweiten Art, wohingegen der zweite Datensammelspeicher im zweiten Konzentratorprozessor D2 nur einen Speicher E2 für die Daten der ersten Art enthält.

Wie ausgeführt wurde, fragen die Gruppenprozessoren und der zentrale Prozessor zyklisch laufend die Konzentratorprozessoren in jedem der Konzentratoren auf ein Vorliegen von Daten der ersten und der zweiten Art ab, wobei Gruppenprozessoren in der angegebenen Weise mitwirken können, indem sie einen Teil dieser Funktionen übernehmen. Das Abfragen der Daten der ersten Art dient in der angegebenen Weise zur Abwicklung des Vermittlungsbetriebes. Dieses Abfragen geschieht relativ häufig in relativ kurzen Zeitabständen, damit in der Herstellung und Durchschaltung von Verbindungen keine unerwünschten und unnötigen Verzögerungen eintreten. Das Abfragen der Daten der zweiten Art dagegen geschieht weniger häufig, und zwar in bestimmten vorgegebenen vergleichsweise (so.!) größeren Zeitabständen. Der erste Datenabrufsammelspeicher in jedem der Konzentratorprozessoren in jedem der Konzentratoren wird also laufend auf ein Vorliegen von Daten der ersten Art und andererseits in vorgegebenen Zeitabständen auf ein Vorliegen von Daten der zweiten Art abgefragt. Die zweiten Datenabrufsammelspeicher in jedem der Konzentratoren werden laufend nur auf ein Vorliegen von kurzzeitig zwischengespeicherten Daten der ersten Art abgefragt.

Es kann nun der Fall eintreten, daß sich hinsichtlich des Abfragens eines Konzentratorprozessors durch den zentralen Prozessor - gegebenenfalls unter Mitwirkung des betreffenden Gruppenprozessors - Störungen bemerkbar machen. Diese können darin bestehen, daß die Zeitmultiplexleitung P1 oder die Zeitmultiplexleitung z14 von einer Störung betroffen wurde oder auch die Anschlußgruppe LTG14 oder deren Gruppenprozessor, oder daß solche Störungen auch in Kombination eingetreten sind. Sie können auch in einer Betriebsüberlastung der betreffenden PCM-Leitung, z.B. P1, bestehen. Welcher Art die eingetretene Störung auch ist - jedenfalls stellt der zentrale Prozessor CP fest, daß er mit dem ersten Konzentratorprozessor des betreffenden Konzentrators aus irgendwelchen Gründen nicht in Verbindung treten kann. Der Vermittlungsbetrieb dieses Konzentrators kann dann zwar noch über seinen zweiten Konzentratrorprozessor D2 und den über die PCM-Leitungen P2 und z35 verlaufenden Weg weitergeführt werden (vgl. u.a. die DE-OS 3 224 459), aber der zentrale Prozessor CP kann dann an die im ersten Konzentratorprozessor zwischengespeicherten zweiten Daten zwecks Abfragens über den über die PCM-Leitung P1 verlaufenden Weg nicht mehr herankommen. Diese zweiten Daten liegen zwar gesammelt und zwischengespeichert im Datenabrufsammelspeicher des ersten Konzentratorprozessors für die Abfrage durch den zentralen Prozessor bereit, aber der Zugang über die PCM-Leitung P1 ist ihm dafür zur Zeit störungsbedingt o.ä. nicht gegeben. Für diesen Fall ist erfindungsgemäß vorgesehen, daß der erste Datenabrufsammelspeicher die von ihm abgerufenen, gesammelten und zwischengespeicherten Daten der zweiten Art kontinuierlich zerstörungsfrei aus seinem hierfür vorgesehenen Speicher E mittels einer Leseeinrichtung L liest und über eine Hilfsleitung a zu einer Abfragestelle A im zweiten Konzentratorprozessor D2 laufend überträgt. Dadadurch stehen sie hier ohne eine Zwischenspeicherung kontinuierlich für den zentralen Prozessor empfangsbereit zur Verfügung.

Die im Speicher E gesammelten und zwischengespeicherten Daten der zweiten Art werden also pausenlos mittels der Leseeinrichtung L zerstörungsfrei gelesen aus dem Speicher E und über den Weg a weitergegeben. Dies geschieht immer, also auch dann, wenn keine Störung vorliegt. In diesem Falle, wenn also keine Störung vorliegt, gelangen diese zweiten Daten über den Weg a lediglich bis zur Abfragestelle A. Tritt nun der oben beschriebene Störungsfall o.ä. ein, so stellt der zentrale Prozessor CP fest, daß er momentan keinen Zugang hat zu dem ersten Konzentratorprozessor des betreffenden Konzentrators. Es kann sein, daß er dies feststellt, wenn er Daten der zweiten Art vom betreffenden ersten Konzentratorprozessor abfragen möchte oder auch dann, wenn er Daten der ersten Art von ihm abfragen möchte. Stellt der zentrale Prozessor die angegebene Störung fest, so steuert er sofort über die PCM-Leitungen z35 und P2 und über die Anschlußgruppe LTG35 den zweiten Konzentratorprozessor des betreffenden Konzentrators an. Wenn also der zentrale Prozessor beim Abfragen des betreffenden ersten Konzentratorprozessors eine Störung bei der Abwicklung dieses Vorganges feststellt, insbesondere eine Störung der zu jenem führenden Datenleitung, steuert er sofort den zweiten Konzentratorprozessor des betreffenden Konzentrators über den ihm entsprechenden Weg an, und zwar steuert er in diesem Konzentratorprozessor die Abfragestelle A an und empfängt über diese die kontinuierlich empfangsbereit über den Weg a zur Verfügung stehenden zweiten Daten, die die Leseeinrichtung L vom ersten Konzentratorprozessor über den Weg a laufend hintereinander weg zur Abfragestelle A hin abgibt. Ohne einen dem Zwischenspeicher E entsprechenden Speicher im zweiten Konzentratorprozessor D2 können also die im Konzentrator K von den einzelnen Indikationsstellen abgerufenen, gesammelten und zwischengespeicherten Daten der zweiten Art auch über den zweiten Konzentratorprozessor durch den zentralen Prozessor hereingeholt werden.

Von besonderer Bedeutung in diesem Zusammenhang ist die Tatsache, daß der zentrale Prozessor (unter Mitwirkung des betreffenden Gruppenprozessors, s.o.!) das Hereinholen der Daten der zweiten Art vom Konzentratorprozessor D1 dann über die Abfragestelle A im Konzentratorprozessor D2 sofort in die Wege leitet, wenn er beim Abfragen des Konzentratorprozessors D1 über den direkten Weg (z14, GP14, P1) durch Störung o.ä. sich gehindert sieht; von besonderer Bedeutung ist dabei, daß er dies nicht nur beim Versuch des Abfragens von Daten der zweiten Art sondern in der Regel bei einem - wie oben angegeben - der viel schneller, also in viel kürzeren Zeitabständen aufeinanderfolgenden Vorgänge der Abfrage von Daten der ersten Art erkennt. In der Regel erkennt der zentrale Prozessor also eine solche Störung o.ä. bei einem Versuch der Abfrage von Daten der ersten Art vom Konzentratorprozessor D1 und leitet hierdurch veranlaßt sofort ein Hereinholen der Daten der zweiten Art von diesem Konzentratorprozessor über die Abfragestelle A im Konzentratorprozessor D2 ein.

Es ist auch möglich, in Abweichung von den Ausführungen weiter oben vorzusehen, daß das angesprochene zerstörungsfreie Lesen der Daten der zweiten Art aus dem Speicher E mittels der Leseeinrichtung L und die Weitergabe dieser Daten an die Abfragestelle A in Abhängigkeit davon gestartet wird, daß der betreffende erste Konzentratorprozessor eine Störung feststellt, z.B. seines Datenweges P1, insbesondere dadurch, daß er über eine zu lange Zeit überhaupt nicht mehr vom zentralen Prozessor abgefragt wurde, also abgefragt hinsichtlich von Daten nicht nur der zweiten Art, sondern auch von Daten der ersten Art. Hierzu kann vorgesehen sein, daß im Konzentratorprozessor D1 eine Zeitmeßeinrichtung, z.B. bei L, vorgesehen ist, die den Zeitablauf jeweils von einem Abgefragtwerden durch den zentralen Prozessor bis zum nächsten Abgefragtwerden abmißt und bei Überschreitung eines festgelegten Grenzwertes das zerstörungsfreie Lesen der Daten der zweiten Art aus dem Speicher E startet, welche dann von diesem Zeitpunkt an in der angegebenen Weise kontinuierlich über den Weg a zur Abfragestelle A hin übertragen werden. Dieser Grenzwert ist also ein festgelegtes Zeitmaß. Überschreitet der Zeitabstand von einem Abfragevorgang, insbesondere für Daten der ersten Art, bis zum nächsten dieses festgelegte Zeitmaß, so wird das kontinuierliche zerstörungsfreie Lesen der Daten der zweiten Art aus dem Speicher E sowie deren Übertragung über den Weg a gestartet. Der Grenzwert ist also so festgelegt, daß er dem größtmöglich vorkommenden Zeitabstand zwischen zwei aufeinander folgenden Abfragevorgängen entspricht.

Schließlich ist auch noch auf weitere Zusammenhänge des erfindungsgemäßen Ausführungsbeispieles hinzuweisen. Wie ausgeführt wurde, wickelt der zentrale Prozessor CP die Abfragevorgänge mit Hilfe der Anschlußgruppen und der in ihnen enthaltenen Gruppenprozessoren ab. Es gibt nun Anschlußgruppen LTG älterer und solche neuer Bauart und/oder Arbeitsweise (Hardware und/oder Software). Diese unterscheiden sich u.a. dadurch, daß sie die Daten der zweiten Art in zweierlei Umfang aufzunehmen und weiterzuleiten eingerichtet sind. Anschlußgruppen der älteren Bauart und/oder Arbeitsweise sind für ein Abfragen, Empfangen und Weiterleiten nur eines festgelegten kleinen Rahmens von Daten der zweiten Art, dagegen Anschlußgruppen der neuen Art für einen festgelegten großen Rahmen von Daten der zweiten Art eingerichtet. Dies trifft auch für die Arbeitsweise des zentralen Prozessors CP zu. Ältere und neuere Anschlußgruppen bzw. ältere und neuere zentrale Prozessoren unterscheiden sich in diesem Zusammenhang u.a. auch dadurch, daß sie auf verschiedene Weise die Konzentratorprozessoren auf die Daten der zweiten Art abfragen, z.B. durch unterschiedliche Abfragesignale, vorzugsweise durch ein einmaliges Abfragesignal bzw. durch ein innerhalb einer überwachten, definierten Zeitspanne wiederholtes Abfragesignal. Konzentratorprozessoren wie D2, die keinen Speicher E haben, reagieren hierauf gleichartig, indem sie auf jede Abfrage in gleicher Weise liefern; und zwar geben sie eine ihren Betriebszustand betreffende Information, die in ihnen funktionell vorliegt, z.B. eine Information über das Vorhandensein der vom Ruf- und Zählspannungsgenerator zu liefernden Spannungen. Diese Information liegt also funktionell im Konzentratorprozessor unmittelbar vor und es bedarf hierfür keines Abrufens, keines Sammels und keines Speicherns mit Hilfe eines für Daten der zweiten Art erforderlichen Abrufsammelspeichers. Konzentratorprozessoren mit einem Speicher E dagegen liefern auf ein einmaliges Abfragesignal Daten der zweiten Art in dem genannten kleinen Rahmen, dagegen auf ein wiederholtes Abfragsignal Daten der zweiten Art in dem genannten großen Rahmen, wie weiter oben im Detail ausführlich beschrieben.

Wenn nun die PCM-Leitung P1 oder z14 gestört oder überlastet ist, und der Prozessor CP die Daten der zweiten Art nicht über die Anschlußgruppe LTG14 vom Konzentratorprozessor D1 erhalten kann, versucht er es in der weiter oben ausführlich beschriebenen Weise über die Anschlußgruppe LTG35. Diese nun fragt beim Konzentratorprozessor D2 wie beschrieben an. Wenn nun hier ein Abfragesignal eintrifft, vermag dieser Konzentratorprozessor D2 deshalb, weil er ein Konzentratorprozessor älterer Bauart und/oder Arbeitsweise ist, nicht zu unterscheiden, ob es sich bei dem erhaltenen Abfragesignal um ein innerhalb der definierten Zeitspanne einmaliges oder wiederholtes Abfragesignal gehandelt hat. Deshalb ist vorgesehen, daß der Konzentratorprozessor D1 speichert, ob er - angefragt von der Anschlußgruppe LTG14 - es mit einer Anschlußgruppe älterer Bauart und/oder Arbeitsweise oder mit einer Anschlußgruppe neuer Bauart und/oder Arbeitsweise zu tun hat. Im vorliegenden Falle (LTG14) also mit einer Anschlußgruppe neuer Bauart und/oder Arbeitsweise. Generell registriert er dies und speichert es. Der Konzentratorprozessor D1 hat also von früheren Abfragen her, z.B. bei der ersten Abfrage nach Betriebsbeginn, die Information gespeichert, ob er es mit einer Anschlußgruppe älterer Bauart und/oder Arbeitsweise oder einer solchen neuer Bauart und/oder Arbeitsweise zu tun hat. Diese Speicherung ist also eine langfristige. Demgemäß liefert er die Daten der zweiten Art in der weiter oben beschriebenen Weise, immer in kleinem Rahmen oder immer im großen Rahmen, und zwar nicht nur über die PCM-Leitung P1, wenn diese für die Abfrage benutzt wird, sondern auch dann, wenn diese nicht benutzt werden kann (wegen einer Störung oder wegen Betriebsüberlastung), wenn also aushilfsweise die PCM-Leitungen P2 und z35 benutzt werden müssen. Er liefert die Daten der zweiten Art in der weiter oben beschriebenen Weise, also auch über den Weg a und über die Abfragestelle A in der ihm gewohnten Weise nach Maßgabe der zuvor angesprochenen in ihm gespeicherten Information, die er beim Abgefragtwerden bei früheren Abfragevorgängen aus dem betreffenden Abfragesignal bzw. den betreffenden (wiederholten) Abfragesignalen abgeleitet hat.

Über den Weg a und die Abfragestelle A werden also die Daten der zweiten Art im kleinen Rahmen oder auch im großen Rahmen geliefert, obwohl der Konzentratorprozessor D2 überhaupt nicht zu erkennen imstande ist, daß die Abfrage wiederholt innerhalb der definierten Zeitspanne stattgefunden hat, und daß damit eine Anforderung vorliegt, die Daten der zweiten Art im großen Rahmen verlangt. Er liefert die Daten im erwähnten großen Rahmen vielmehr alleine aufgrund der früher über den Weg der dann noch funktionsfähig gewesenen PCM-Leitung P1 übertragenen Abfragesignale, genauer gesagt aufgrund der in der jedesmal zweimaligen Übertragung des Abfragesignales innerhalb der überwachten definierten Zeitspanne enthaltenen und im Konzentratorprozessor D1 gespeicherten Information darüber, daß die Anschlußgruppe LTG14 eine Anschlußgruppe neuerer Bauart und/oder Arbeitsweise ist und daß die Daten der zweiten Art in dem beschriebenen großen Rahmen erwartet werden, was nicht alleine die betreffenden Gruppenprozessoren sondern auch den zentralen Prozessor betrifft. Es kann nämlich der Fall sein, daß die Anschlußgruppe LTG14 einschließlich ihrem Gruppenprozessor GP14, sowie der zentrale Prozessor TP neuerer Bauart und/oder Arbeitsweise sind (Daten der zweiten Art werden im großen Rahmen erwartet), dagegen die Anschlußgruppe LTG35 einschließlich ihrem Gruppenprozessor GP35 von alter Bauart und/oder Arbeitsweise ist (Daten der zweiten Art werden in kleinem Rahmen erwartet). Für diesen Fall ist Vorsorge getroffen durch die Speicherung der aus dem Abfragesignal bei früheren Abfragen resultierenden Information in dem Konzentratorprozessor D1 darüber, daß die Anschlußgruppe LTG14 und der zentrale Prozessor CP die Daten der zweiten Art in dem erwähnten großen Rahmen erwarten (insbesondere letzterer). Müssen nun die Daten der zweiten Art vom Konzentratorprozessor D1 über den Weg a und über die Anschlußstelle A im Konzentratorprozessor D2 zum zentralen Prozessor CP in der beschriebenen Weise übermittelt werden, so kann der zentrale Prozessor also die Daten der zweiten Art im großen Rahmen bekommen, und zwar unbeschadet der Tatsache, daß die Anschlußgruppe LTG35 und der Konzentratorprozessor D2 von älterer Bauart und/oder Arbeitsweise sind, also selber nicht für ein Abfragen der Daten der zweiten Art in großem Rahmen eingerichtet sind. -

Der Konzentratorprozessor D1, der für ein Abrufen, Sammeln und Zwischenspeichern der Daten der zweiten Art im großen Rahmen eingerichtet ist, kann aber auch mit Anschlußgruppen und mit einem zentralen Prozessor CP älterer Bauart und/oder Arbeitsweise zusammenarbeiten. In diesem Falle wird er immer nur mit einem einmaligen Abfragesignal auf Daten der zweiten Art abgefragt und erkennt hieraus, daß er die Daten der zweiten Art nur im kleinen Rahmen zu geben hat. Dies gilt sowohl für ein Abgeben der Daten der zweiten Art über die PCM-Leitung P1 als auch für die Abgabe der Daten der zweiten Art über den Weg a und die Anschlußstelle A und die PCM-Leitungen P2 und z35 in der im einzelnen beschriebenen Weise.

## Patentansprüche

1. Schaltungsanordnung für Fernmeldeanlagen, insbesondere Fernsprechvermittlungsanlagen, in denen
- dezentrale Schaltungseinheiten, z.B. Teilnehmerstellen (Tx..Tz), über ein teilzentrales Schaltglied (K), z.B. einen Konzentrator, mit einer zentralen Schalteinrichtung (CP), z.B. einem Prozessor, zur Abfrage von zum einen Daten einer ersten Art, z.B. Vermittlungs-Betriebs-Daten, und zum anderen Daten einer zweiten Art, z.B. die Schaltungseinheiten betreffende Betriebszustandsdaten, verbunden sind, und
- das Schaltglied derart ausgestaltet ist, daß auf einen seitens der Schalteinrichtung mittels des Schaltgliedes bewirkten Abruf von Daten, die von den Schaltungseinheiten stammen, diese Daten in dem Schaltglied gesammelt und zwischengespeichert werden, und
- in dem Schaltglied zwei parallel und unabhängig voneinander die Datenabruf-, Datensammel- und Datenzwischenspeicherungsvorgänge in zyklischem Umlauf über alle dem betreffenden Schaltglied zugeordnete Schaltungseinheiten hin abwickelnde Datenabrufsammelspeicher (E1, E; E2) vorgesehen sind, und
- Mittel vorgesehen sind, um die Datensammelspeicher seitens der Schalteinrichtung über eine dem Schaltglied zugeordnete Datenleitung auf ein Vorliegen zwischengespeicherter Daten abzufragen,
**dadurch gekennzeichnet**,
- daß in einem der beiden Datenabrufsammelspeicher (E1, E) außer Daten der ersten Art auch Daten der zweiten Art, dagegen in dem anderen der beiden Datenabrufsammelspeicher (E2) nur Daten der ersten Art Abgerufen, gesammelt und zwischengespeichert werden, und
- daß eine Leseeinrichtung (L) zur kontinuierlichen und zerstörungsfreien Übertragung von in dem einen Datenabrufsammelspeicher abgerufenen, gesammelten und zwischengespeicherten Daten der zweiten Art an eine Abfragestelle (A) in dem anderen Datenabrufsammelspeicher vorgesehen ist, wo sie für die Schalteinrichtung ohne Zwischenspeicherung kontinuierlich empfangsbereit zur Verfügung stehen, und
- daß die Schalteinrichtung Mittel zum Abfragen der beiden Datenabrufsammelspeicher einerseits in regelmäßiger Folge in relativ kurzen Zeitabständen auf ein Vorliegen von Daten der ersten Art und andererseits nur der eine Datenabrufsammelspeicher zusätzlich laufend in regelmäßigen, relativ längeren Zeitabständen auf ein Vorliegen von Daten der zweiten Art enthält, und
- daß im Fall einer durch die Schalteinrichtung festgestellten Störung bei einer Abfrage über die Datenleitung (P1, z14) des einen Datenabrufsammelspeichers, insbesondere im Fall einer Störung der zugehörigen Datenleitung, der andere Datenabrufsammelspeicher von der Schalteinrichtung über die zugehörige Datenleitung (P2, z35) angesteuert wird und die dort kontinuierlich empfangsbereit zur Verfügung stehenden Daten der zweiten Art über die Abfragestelle zu der Schalteinrichtung übertragen werden.

2. Schaltungsanordnung nach Anspruch 1,
**dadurch gekennzeichnet**,
daß die Schalteinrichtung derart ausgestaltet ist, daß Daten der ersten Art in viel kürzeren Zeitabständen von den Datenabrufsammelspeichern abgefragt werden als Daten der zweiten Art.

3. Schaltungsanordnung nach Anspruch 1,
**dadurch gekennzeichnet**,
daß in dem einen Datenabrufsammelspeicher der Vorgang des kontinuierlichen zerstörungsfreien Lesens und Übertragens der Daten der zweiten Art in Abhängigkeit davon gestartet wird, daß dieser Datenabrufsammelspeicher während einer ein festgelegtes Zeitmaß überschreitenden Zeitdauer nicht auf ein Vorliegen von Daten der ersten Art und/oder von Daten der zweiten Art abgefragt wurde.

4. Schaltungsanordnung nach Anspruch 3,
**dadurch gekennzeichnet**,
daß die Schalteinrichtung Mittel zum Festlegen des in dem einen Datenabrufsammelspeicher festgelegten Zeitmaßes nach Maßgabe des größtmöglichen Zeitabstandes zwischen zwei Abfragevorgängen, insbesondere für Daten der ersten Art, enthält.

5. Schaltungsanordnung nach Anspruch 1,
**gekennzeichnet durch**
eine zentrale Schalteinrichtung, deren Abfragevorgänge über teilzentrale Schalteinrichtungen, insbesondere Anschlußgruppen (LTG 14, LTG 35) und ihnen zugeordnete Gruppenprozessoren (GP 14, GP 35) abgewickelt werden, wobei die in dem Schaltglied vorgesehenen beiden Datenabrufsammelspeicher derart ausgestaltet sind, daß sie über zwei verschiedene teilzentrale Schalteinrichtungen von der zentralen Schalteinrichtung zur Abfrage ansteuerbar sind.

6. Schaltungsanordnung nach Anspruch 5,
**dadurch gekennzeichnet**,
- daß die zentrale Schalteinrichtung und/oder die teilzentrale Schalteinrichtung nach Maßgabe ihrer Bauart, insbesondere älterer und neuerer Bauart, Mittel zur Aufnahme von Daten der zweiten Art in Rahmen jeweils unterschiedlicher Länge enthalten, und
- daß Mittel vorgesehen sind, um von der zentralen Schalteinrichtung und/oder der teilzentralen Schalteinrichtung nach Maßgabe ihrer Bauart ein jeweils unterschiedliches Abfragesignal an das teilzentrale Schaltglied zu übertragen, und
- daß in dem einen Datenabrufsammelspeicher bei einer Abfrage Mittel zum Speichern der Bauart der betreffenden zentralen Schalteinrichtung und/oder der betreffenden teilzentralen Schalteinrichtung nach ihrer Erkennung aus der Abfrage vorgesehen sind und
- daß Mittel zum Übertragen der Daten der zweiten Art nach Maßgabe dieser Speicherung in Rahmen der entsprechenden Länge zu der zentralen Schalteinrichtung und/oder der teilzentralen Schalteinrichtung, gegebenenfalls über die Abfragestelle im anderen Datenabrufsammelspeicher vorgesehen sind.

## Claims

1. Circuit arrangement for telecommunication systems, especially telephone switching systems, in which
- decentralized circuit units, for example subscriber stations (Tx..Tz) are connected via an intermediate-level switching element (K), for example a concentrator, to a central switching device (CP), for example a processor, for interrogating data of a first type, for example switching service data, on the one hand, and, on the other hand, data of a second type, for example operating state data relating to the circuit units, and
- the switching element is constructed in such a manner that, following a retrieval of data which originate from the circuit units, effected by the switching device by means of the switching element, these data are accumulated in the switching element and are temporarily stored, and
- in the switching element, two data retrieval accumulators (E1, E; E2) are provided, which handle the data retrieval, data accumulation and temporary data storage processes in cyclic circulation through all circuit units associated with the relevant switching element in parallel and independently of one another, and
- means are provided in order to interrogate the data accumulators for a presence of temporarily stored data by the switching device via a data line associated with the switching element,
characterized in that
- apart from data of the first type, data of the second type are also retrieved, accumulated and temporarily stored in one of the two data retrieval accumulators (E1, E) whereas only data of the first type are retrieved, accumulated and temporarily stored in the other one of the two data retrieval accumulators (E2), and
- in that a reading device (L) for the continuous and non-destructive transmission of data of the second type, retrieved, accumulated and temporarily stored in one data retrieval accumulator, to an interrogation station (A) in the other data retrieval accumulator is provided, where they are available ready for reception continuously without temporary storage for the switching device, and
- in that the switching device contains means for interrogating the two data retrieval accumulators for a presence of data of the first type at relatively short time intervals at regular sequence, on the one hand, and, on the other hand, only the one data retrieval accumulator additionally continuously at regular relatively longer time intervals for a presence of data of the second type, and
- in that in the case of a disturbance found by the switching device during an interrogation via the data line (P1, z14) of one data retrieval accumulator, particularly in the case of a disturbance of the associated data line, the other data retrieval accumulator is addressed by the switching device via the associated data line (P2, z35) and the data of the second type, which are continuously available there ready for reception, are transmitted via the interrogation station to the switching device.

2. Circuit arrangement according to Claim 1, characterized in that the switching device is constructed in such a manner that data of the first type are interrogated by the data retrieval accumulators at much shorter time intervals than data of the second type.

3. Circuit arrangement according to Claim 1, characterized in that the process of the continuous non-destructive reading and transmitting of the data of the second type is started in one data retrieval accumulator in dependence on that this data retrieval accumulator has not been interrogated for a presence of data of the first type and/or of data of the second type during a period exceeding a predetermined measure of time.

4. Circuit arrangement according to Claim 3, characterized in that the switching device contains means for determining the measure of time determined in one data retrieval accumulator as determined by the greatest possible time interval between two interrogation processes, particularly for data of the first type.

5. Circuit arrangement according to Claim 1, characterized by a central switching device, the interrogation processes of which are handled via intermediate-level switching devices, especially line trunk groups (LTG 14, LTG 35) and their associated group processors (GP 14, GP 35), the two data retrieval accumulators provided in the switching element being constructed in such a manner that they can be addressed for interrogation by the central switching device via two different intermediate-level switching devices.

6. Circuit arrangement according to Claim 5, characterized in that
- the central switching device and/or the intermediate-level switching device contain means for accommodating data of the second type in frames of in each case different length as determined by their type of construction, particularly an older and a newer type of construction, and
- in that means are provided in order to transmit an in each case different interrogation signal to the intermediate-level switching element from the central switching device and/or the intermediate-level switching device as determined by their type of construction, and
- in that in one data retrieval accumulator, during an interrogation, means for storing the type of construction of the relevant central switching device and/or the relevant intermediate-level switching device after their detection from the interrogation are provided and
- in that means for transmitting the data of the second type as determined by this storage in frames of the corresponding length to the central switching device and/or the intermediate-level switching device, if necessary via the interrogation station in the other data retrieval accumulator are provided.

## Revendications

1. Montage pour des installations de télécommunication, notamment des installations de commutation téléphonique, dans lesquelles
- des unités décentralisées de circuit, par exemple des postes d'abonnés (Tx...Tz), sont reliées, par l'intermédiaire d'un circuit partiellement central de commutation (K), par exemple un concentrateur, à un dispositif central de commutation (CP), par exemple un processeur, pour l'interrogation, d'une part, de données d'un premier type, par exemple des données de service de commutation, et, d'autre part, de données d'un second type, par exemple des données d'état de service concernant des unités de circuits, et
- le circuit de commutation est agencé de telle sorte que lors d'un appel, réalisé à partir du dispositif de commutation au moyen du circuit de commutation, de données qui proviennent des unités de circuits, ces données sont collectées dans le circuit de commutation et sont mémorisées temporairement, et
- dans le circuit de commutation sont prévues deux mémoires d'appel et de collecte de données (E1, E; E2), qui exécutent en parallèle et d'une manière indépendante l'une de l'autre, des processus d'appel de données, de collecte de données et de mémorisation temporaire de données, selon une séquence cyclique passant par toutes les unités de circuits associées au circuit de commutation considéré, et
- des moyens sont prévus pour interroger les mémoires de collecte de données à partir du circuit de commutation par l'intermédiaire d'unités de transmission de données associées au circuit de commutation, en ce qui concerne la présence éventuelle de données mémorisées temporairement,
- caractérisé par le fait
- qu'en dehors des données du premier type, également des données du second type sont appelées, collectées et mémorisées temporairement dans l'une des deux mémoires d'appel et de collecte de données (E1, E), mais que seules des données du premier type sont appelées, collectées et mémorisées temporairement dans l'autre des deux mémoires d'appel et de collecte de données (E2), et
- qu'un dispositif de lecture (L) pour transmettre continûment et sans destruction des données du second type appelées, collectées et mémorisées temporairement dans une mémoire d'appel et de collecte de données, est prévu dans un poste d'interrogation (A) dans l'autre mémoire d'appel et de collecte de données, où elles sont disponibles continûment sans mémorisation intermédiaire et en étant prêtes à la réception, pour le dispositif de commutation,
- que le dispositif de commutation comporte des moyens pour interroger la mémoire d'appel et de collecte de données, d'une part, selon une séquence régulière pendant des intervalles de temps relativement brefs en rapport avec la présence éventuelle de données du premier type et, d'autre part, en supplément d'une manière permanente et à des intervalles de temps réguliers relativement plus longs, seule l'une des mémoires d'appel et de collecte de données en ce qui concerne la présence éventuelle de données du second type, et
- que dans le cas d'une perturbation fixée, déterminée par le dispositif de commutation, lors d'une interrogation par l'intermédiaire de la ligne de transmission de données (P1, z14) d'une mémoire d'appel et de collecte de données, notamment dans le cas d'une perturbation de la ligne associée de transmission de données, l'autre mémoire d'appel et de collecte de données est commandée par le circuit de commutation, par l'intermédiaire de la ligne associée de transmission de données (P2, z35) et que les données du second type disponibles continûment dans cette mémoire, dans un état prêt à la réception, sont transmises au dispositif de commutation par l'intermédiaire du poste d'interrogation.

2. Montage suivant la revendication 1, caractérisé par le fait que le dispositif de commutation est agencé de telle sorte que des données du premier type sont interrogées dans les mémoires d'appel et de collecte de données pendant des intervalles de temps beaucoup plus courts pour des données du second type.

3. Montage suivant la revendication 1, caractérisé par le fait que dans une mémoire d'appel et de collecte de données, le processus de lecture et de transmission, continues et sans destruction, des données du second type est déclenché en fonction de ce que cette mémoire d'appel et de collecte de données n'a pas été interrogée pendant un intervalle de temps dépassant un intervalle de temps fixé, pour ce qui concerne la présence éventuelle de données du premier type et/ou de données du second type.

4. Montage suivant la revendication 3, caractérisé par le fait que le dispositif de commutation comporte des moyens pour déterminer l'intervalle de temps fixé dans une mémoire d'appel et de collecte de données, en fonction de l'intervalle de temps maximum possible entre deux processus d'interrogation, en particulier pour des données du premier type.

5. Montage suivant la revendication 1, caractérisé par un dispositif central de commutation, dont les processus d'interrogation se déroulent par l'intermédiaire de dispositifs partiellement centraux de commutation, notamment des groupes de raccordement (LTG 14, LTG 35) et des processeurs de groupe (GP 14, GP 35), qui leur sont associés, les deux mémoires d'appel et de collecte de données, qui sont prévues dans le circuit de commutation, sont agencées de telle sorte qu'elles peuvent être commandées par le dispositif central de commutation pour l'interrogation, par l'intermédiaire de deux dispositifs de commutation partiellement centraux différents.

6. Montage suivant la revendication 5, caractérisé par le fait
- que le dispositif central de commutation et/ou le dispositif de commutation partiellement central comportent, en fonction de leur type de réalisation, notamment d'un type plus ancien et un type plus récent, des moyens pour recevoir des données du second type dans le cadre de longueurs respectivement différentes, et
- que des moyens sont prévus pour que le dispositif central de commutation et/ou le dispositif partiellement central de commutation transmettent, en fonction de son type de réalisation, un signal d'interrogation respectivement différent au circuit partiellement central de commutation, et
- que dans la première mémoire d'appel et de collecte de données, des moyens sont prévus pour mémoriser, lors d'une interrogation, le type de réalisation du dispositif central considéré de commutation et/ou du dispositif partiellement central considéré de commutation, en fonction de leur identification à partir de l'interrogation, et
- que des moyens sont prévus pour transmettre les données du second type en fonction de cette mémorisation dans le cadre de la longueur correspondante au dispositif central de commutation et/ou au dispositif partiellement central de commutation, éventuellement par l'intermédiaire du poste d'interrogation situé dans la seconde mémoire d'appel et de collecte de données.
